(19) Europäisches Patentamt
European Patent Office
Office européen des brevets

(11) EP 4 122 990 A1

(12) # EUROPEAN PATENT APPLICATION
published in accordance with Art. 153(4) EPC

(43) Date of publication:
**25.01.2023 Bulletin 2023/04**

(21) Application number: **21770466.7**

(22) Date of filing: **18.03.2021**

(51) International Patent Classification (IPC):
***C09D 167/00*** *(2006.01)* ***B05D 1/36*** *(2006.01)*
***B05D 7/24*** *(2006.01)* ***C09D 5/02*** *(2006.01)*
***C09D 133/00*** *(2006.01)* ***C09D 161/28*** *(2006.01)*
***C09D 175/04*** *(2006.01)*

(52) Cooperative Patent Classification (CPC):
**B05D 1/36; B05D 7/24; C09D 5/02; C09D 133/00; C09D 161/28; C09D 167/00; C09D 167/06; C09D 175/04**

(86) International application number:
**PCT/JP2021/011130**

(87) International publication number:
**WO 2021/187568 (23.09.2021 Gazette 2021/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.03.2020 JP 2020048793**

(71) Applicant: **Nippon Paint Automotive Coatings Co., Ltd.**
**Hirakata-shi, Osaka 573-1153 (JP)**

(72) Inventors:
- **SEKINE, Kazuki**
**Hirakata-shi, Osaka 573-1153 (JP)**
- **OHTONARI, Masatoshi**
**Hirakata-shi, Osaka 573-1153 (JP)**

(74) Representative: **Mewburn Ellis LLP**
**Aurora Building**
**Counterslip**
**Bristol BS1 6BX (GB)**

(54) # AQUEOUS COATING COMPOSITION AND MULTILAYERED COATING FILM FORMATION METHOD

(57) The present invention provides an aqueous coating composition that exhibits a small change in viscosity and can form a coating film having a superior coating film appearance even when the amount of a solvent contained in the aqueous coating composition decreases due to the change of the coating environment. An aqueous coating composition containing a polyester resin dispersion (A) and a melamine resin (B), wherein the polyester resin constituting the polyester resin dispersion (A) contains an alkyd resin having an acrylic vinyl-based polymer segment; the melamine resin (B) contains a hydrophobic melamine resin; as to a viscosity of a dry coating film of the coating composition, a coating film viscosity η1 of a dry coating film whose solid content is 60% by mass and a coating film viscosity η2 of a dry coating film whose solid content is 80% by mass satisfy the following condition:

$$1 \leq \eta 2/\eta 1 \leq 10,$$

where the coating film viscosities η1 and η2 are viscosities measured at a temperature of 25°C and a shear rate of 0.1 $sec^{-1}$.

EP 4 122 990 A1

## Description

TECHNICAL FIELD

The present invention relates to an aqueous coating composition and a method for forming a multilayer coating film.

BACKGROUND ART

Aqueous coating compositions are coating compositions containing an aqueous solvent, and are disclosed in, for example, Patent Literature 1 and 2.

CITATIONS LIST

PATENT LITERATURE

Patent Literature 1: JP-A-2008-302274
Patent Literature 2: JP-A-2006-70095

SUMMARY OF INVENTION

TECHNICAL PROBLEMS

Generally, such an aqueous coating composition tends to be affected in the rate of solvent volatilization by the change of coating environment such as temperature and humidity in coating. The change of the rate of solvent volatilization may cause change of the appearance and/or the physical properties of a coating film formed by application.

One example of coping with such change of the coating environment may be a method of adjusting the rate of solvent volatilization by adjusting the amount of the solvent contained in the aqueous coating composition. For example, JP-A-2008-302274 (Patent Literature 1) discloses a method of determining a coating NV (nonvolatile content) according to the coating environment. As disclosed in Patent Literature 1, in the application of an aqueous coating composition, parameters such as the viscosity of the coating composition are often adjusted by adjusting the amount of the solvent of the aqueous coating composition, etc. according to the coating environment such as temperature and humidity. However, such adjustment of parameters is complicated.

In the application of an aqueous coating composition, another means for reducing the influence of the coating environment may be the use of a viscosity control agent. For example, JP-A-2006-70095 (Patent Literature 2) discloses a multicomponents aqueous coating composition comprising (I) a diluent and (II) a base coating material, wherein the diluent (I) comprises a viscosity control agent (A) and water, the base coating material (II) comprises a resin component (B), a viscosity control agent (C) and water, and the viscosity control agent (A) and the viscosity control agent (C) are selected from a combination of an inorganic viscosity control agent and a polyacrylic viscosity control agent, a combination of a urethane-associated viscosity control agent and a polyacrylic viscosity control agent, and a combination of a urethane-associated viscosity control agent and an inorganic viscosity control agent (claim 1). On the other hand, in the method of adjusting the viscosity using a viscosity control agent, it is possible to increase the viscosity of the coating composition, but it is difficult to design a coating composition having a low viscosity.

Incidentally, in the field of the application of a coating composition, there is an application method called "wet-on-wet" that can shorten the application process by applying a first coating composition, then applying a second coating composition without curing the resulting coating film, and then curing the two coating films simultaneously. However, the case where the first coating composition and the second coating composition are wet-on-wet applied is problematic in that the coating compositions are mixed at between the layers of the two uncured coating films (mix of layers) and, as a result, an undesirable phenomenon, namely, deterioration of coating film appearance may occur.

In view of the above problems, there is a demand for a means for forming a coating film having reduced influence of a coating environment and being superior in strength and chipping resistance without impairing the appearance of a resulting coating film in the application of an aqueous coating composition. The present invention solves the above problems, and an object of the present invention is to provide an aqueous coating composition that exhibits a small change in viscosity and can form a coating film having a superior coating film appearance even when the amount of a solvent contained in the aqueous coating composition decreases due to the change of the coating environment.

SOLUTION TO PROBLEMS

In order to solve the above-described problems, the present invention provides the following embodiments.

[1] An aqueous coating composition comprising:

a polyester resin dispersion (A); and
a melamine resin (B),
wherein

the polyester resin constituting the polyester resin dispersion (A) comprises an alkyd resin having an acrylic vinyl-based polymer segment,
the melamine resin (B) comprises a hydrophobic melamine resin,
as to a viscosity of a dry coating film of the coating composition, a coating film viscosity $\eta 1$ of a dry coating film whose solid content is 60% by mass and a coating film viscosity $\eta 2$ of a dry coating film whose solid content is 80% by mass satisfy the following condition:

$$1 \leq \eta 2/\eta 1 \leq 10$$

where the coating film viscosities $\eta 1$ and $\eta 2$ are viscosities measured at a temperature of 25°C and a shear rate of 0.1 $sec^{-1}$.

[2] The aqueous coating composition of [1], wherein the aqueous coating composition comprises one or more dispersions selected from the group consisting of a polyacrylic resin dispersion and a polyurethane resin dispersion.
[3] The aqueous coating composition according to [1] or [2], wherein the alkyd resin comprises the acrylic vinyl-based polymer segment in an amount of 20% by mass or more and 50% by mass or less.
[4] The aqueous coating composition according to any one of [1] to [3], wherein the alkyd resin has a structure derived from an alicyclic polybasic acid in an amount of 20% by mass or more and 45% by mass or less.
[5] A method for forming a multilayer coating film, the method comprising:

step (1) of applying a first aqueous base coating composition of any one of [1] to [4] to a surface of an article to be coated to obtain an uncured first aqueous base coating film;
step (2) of applying a second aqueous base coating composition to the uncured first aqueous base coating film to form an uncured second aqueous base coating film;
step (3) of applying a clear coating composition to the uncured second aqueous base coating film to form an uncured clear coating film; and
step (4) of heating and curing the uncured first aqueous base coating film, the uncured second aqueous base coating film, and the uncured clear coating film obtained in the steps (1) to (3) at one time to form a multilayer coating film.

ADVANTAGEOUS EFFECTS OF INVENTION

The aqueous coating composition according to any embodiment of the present invention is characterized in that by virtue of containing a specific polyester resin dispersion (A), the viscosity change is small even when the amount of the solvent contained in the coating composition is reduced. Therefore, there is an advantage that coating can be performed without significantly changing coating workability even in a state where the amount of solvent has been reduced. The aqueous coating composition according to any embodiment of the present invention has an advantage that it exhibits good coating workability even under various coating environments differing in temperatures and/or humidity.

DESCRIPTION OF EMBODIMENTS

[Aqueous coating composition]

The aqueous coating composition comprises a polyester resin dispersion (A) and a melamine resin (B). In the following, respective components are described in detail.

(1) Polyester resin dispersion (A)

The polyester resin constituting the polyester resin dispersion (A) comprises an alkyd resin having an acrylic vinyl-based polymer segment. The alkyd resin comprises an acrylic vinyl-based polymer segment (a1) and an alkyd segment (a2). In one embodiment, the polyester resin constituting the polyester resin dispersion (A) may be an alkyd resin.

The polyester resin dispersion (A) can be prepared by solution-polymerizing an α,β-ethylenically unsaturated monomer to adjust an acrylic vinyl-based polymer segment (a1), subjecting a polyhydric alcohol and a polybasic acid or an anhydride thereof to polycondensation (an esterification reaction) to prepare an alkyd segment (a2), conducting an esterification reaction using the resulting acrylic vinyl-based polymer segment (a1) and the resulting alkyd segment (a2), and mixing and stirring the reaction product and an aqueous medium together.

Examples of the α,β-ethylenically unsaturated monomer that can be used for the adjustment of the acrylic vinyl-based polymer segment (a1) include:

(meth)acrylic acid ester monomers, which are esters of alkyl alcohols and (meth)acrylic acid, such as methyl (meth)acrylate, ethyl (meth)acrylate, n-propyl (meth)acrylate, n-butyl (meth)acrylate, t-butyl (meth)acrylate, isobutyl (meth)acrylate, 2-ethylhexyl (meth)acrylate or lauryl (meth)acrylate;

hydroxyl group-containing polymerizable monomers, such as 2-hydroxyethyl (meth)acrylate, hydroxypropyl (meth)acrylate, 4-hydroxybutyl acrylate, diethylene glycol (meth)acrylate, caprolactone-modified hydroxy (meth)acrylate, and N-methylolacrylamide;

alicyclic polymerizable monomers, such as dicyclopentanyl (meth)acrylate, dicyclopentenyl (meth)acrylate, dicyclopentenyloxyethyl (meth)acrylate, cyclohexyl (meth)acrylate, bornyl (meth)acrylate, isobomyl (meth)acrylate, 2-methyl-2-adamantyl (meth)acrylate, dicyclopentanyl (meth)acrylate, and cyclohexyl (meth)acrylate;

aromatic group-containing polymerizable monomers, such as styrene, α-methylstyrene, o-methylstyrene, m-methylstyrene, p-methylstyrene, p-tert-butylstyrene, itaconic acid esters (for example, dimethyl itaconate), maleic acid esters (for example, dimethyl maleate), fumaric acid esters (for example, dimethyl fumarate), and vinyl acetate;

acid group-containing polymerizable monomers, such as (meth)acrylic acid, 2-acryloyloxyethylphthalic acid, 2-acryloyloxyethylsuccinic acid, itaconic acid, maleic acid, and fumaric acid;

crosslinkable monomers having two or more radically polymerizable ethylenically unsaturated groups in the molecule, such as divinylbenzene, allyl (meth)acrylate, ethylene glycol di(meth)acrylate, 1,6-hexanediol di(meth)acrylate, 1,1,1-trishydroxymethylethane di(meth)acrylate, trimethylolpropane tri(meth)acrylate, triallyl isocyanurate, butadiene, and divinylbenzene;

polymerizable nitrile monomers, such as (meth)acrylonitrile;

α-olefins, such as ethylene and propylene;

vinyl ester monomers, such as vinyl acetate, vinyl propionate, and vinyl versatate;

polymerizable amide monomers, such as (meth)acrylamide, N-methylol(meth)acrylamide, N-butoxymethyl(meth)acrylamide, N,N-dimethyl(meth)acrylamide, N,N-dibutyl(meth)acrylamide, N,N-dioctyl(meth)acrylamide, N-monobutyl(meth)acrylamide, N-monooctyl(meth)acrylamide 2,4-dihydroxy-4'-vinylbenzophenone, N-(2-hydroxyethyl)acrylamide, and N-(2-hydroxyethyl)methacrylamide;

polymerizable glycidyl monomers, such as glycidyl (meth)acrylate; and

acid anhydride group-containing polymerizable monomers, such as (meth)acrylic anhydride and maleic anhydride.

As the acid group-containing polymerizable monomer, an unsaturated fatty acid such as dehydrated castor oil may be used. Two or more kinds of α,β-ethylenically unsaturated monomers may be used in combination.

In the present description, "(meth)acryl" shall mean both acryl and methacryl.

Examples of the conditions for the solution polymerization include an embodiment in which solution polymerization is performed in the presence of a polymerization initiator in an organic solvent. The polymerization temperature is preferably in a range of 70°C or higher and 200°C or lower, and more preferably in a range of 90°C or higher and 170°C or lower. The polymerization time is preferably 0.2 hours or more and 10 hours or less, and more preferably 1 hour or more and 6 hours or less.

The organic solvent to be used for the solution polymerization is not particularly limited as long as it does not adversely affect the reaction, and an organic solvent that is usually used can be used. Specific examples of the organic solvent include hydrocarbon solvents such as hexane, heptane, xylene, toluene, cyclohexane, and naphtha; ketone solvents such as methyl isobutyl ketone, methyl ethyl ketone, isophorone, and acetophenone; and ester solvents such as ethyl acetate, butyl acetate, isobutyl acetate, octyl acetate, ethylene glycol monomethyl ether acetate, and diethylene glycol monomethyl ether acetate. These may be used singly or two or more of them may be used in combination.

As the polymerization initiator, those generally used in radical polymerization can be used. Examples of the polymerization initiator include:

azo compounds such as azobisisobutyronitrile, 2,2'-azobis(2-methylbutyronitrile), 2,2'-azobis(2,4-dimethylvaleronitrile), 2,2'-azobis(4-methoxy-2,4-dimethylvaleronitrile), 2-phenylazo-4-methoxy-2,4-dimethylvaleronitrile, 2,2'-azobis{2-methyl-N-[1,1-bis(hydroxymethyl)-2-hydroxyethyl]propionamide}, 2,2'-azobis{2-methyl-N-[2-(1-hydroxyethyl)]propionamide}, 2,2'-azobis{2-methyl-N-[2-(1-hydroxybutyl)]propionamide}, 2,2'-azobis[2-(5-methyl-2-imidazolin-2-yl)propane] and salts thereof, 2,2'-azobis[2-(2-imidazolin-2-yl)propane] and salts thereof, 2,2'-azobis[2-(3,4,5,6-tetrahydropyrimidin-2-yl)propane] and salts thereof, 2,2'-azobis(1-imino-1-pyrrolidino-2-methylpropane) and salts thereof, 2,2'-azobis{2-[1-(2-hydroxyethyl)-2-imidazolin-2-yl]propane} and salts thereof, 2,2'-azobis(2-methylpropionamidine) and salts thereof, and 2,2'-azobis[N-(2-carboxyethyl)-2-methylpropionamidine]; and organic peroxides such as benzoyl peroxide, cumene hydroperoxide, tert-butyl hydroperoxide, tert-butyl peroxy-2-ethylhexanoate, and tert-butyl peroxyisobutyrate.

These may be used singly or two or more of them may be used in combination.

In the solution polymerization, a chain transfer agent may be used, as necessary. By using the chain transfer agent, the molecular weight of a resulting polymer can be prepared. Examples of the chain transfer agent include known chain transfer agents, such as mercaptans such as n-dodecyl mercaptan, tert-dodecyl mercaptan, n-octyl mercaptan, n-tetradecyl mercaptan, and n-hexyl mercaptan; halogen compounds such as carbon tetrachloride and ethylene bromide; and $\alpha$-methylstyrene dimer. These may be used singly or two or more of them may be used in combination. For example, when an $\alpha$-methylstyrene dimer, which is an addition cleavage type chain transfer agent, is used at the time of forming a core part, there is an advantage that polymer chains composed of radically polymerizable monomers having different compositions can be grafted to each other.

Examples of a polyhydric alcohol that can be used for the preparation of the alkyd segment (a2) include ethylene glycol, diethylene glycol, polyethylene glycol, propylene glycol, dipropylene glycol, polypropylene glycol, neopentyl glycol, 1,2-butanediol, 1,3-butanediol., 2,3-butanediol, 1,4-butanediol, 1,5-pentanediol, 1,6-hexanediol, hydrogenated bisphenol A, hydroxyalkylated bisphenol A, 1,4-cyclohexanedimethanol, 2,2-dimethyl-3-hydroxypropyl-2,2-dimethyl-3-hydroxypropionate, 2,2,4-trimethyl-1,3-pentanediol, N,N-bis-(2-hydroxyethyl)dimethylhydantoin, polytetramethylene ether glycol, polycaprolactone polyol, glycerin, sorbitol, trimethylolethane, trimethylolpropane, trimethylolbutane, hexanetriol, pentaerythritol, dipentaerythritol, and tris-(hydroxyethyl) isocyanate. These polyhydric alcohols may be used singly, or two or more of them may be used in combination.

Examples of a polybasic acid or an anhydride thereof that can be used for the preparation of the alkyd segment (a2) include phthalic acid, phthalic anhydride, tetrahydrophthalic acid, tetrahydrophthalic anhydride, hexahydrophthalic acid, hexahydrophthalic anhydride, methyltetrahydrophthalic acid, methyltetrahydrophthalic anhydride, hymic anhydride., trimellitic acid, trimellitic anhydride, pyromellitic acid, pyromellitic anhydride, isophthalic acid, terephthalic acid, maleic acid, maleic anhydride, fumaric acid, itaconic acid, adipic acid, azelaic acid, sebacic acid, succinic acid, succinic anhydride, lactic acid, dodecenylsuccinic acid, dodecenylsuccinic anhydride, cyclohexane-1,4-dicarboxylic acid, and endic anhydride. In addition, a fatty acid such as coconut oil may be used. These polybasic acids or anhydrides thereof may be used singly, or two or more of them may be used in combination.

Among them, an alicyclic polybasic acid such as phthalic acid, phthalic anhydride, tetrahydrophthalic acid, tetrahydrophthalic anhydride, hexahydrophthalic acid, hexahydrophthalic anhydride, methyltetrahydrophthalic acid, and methyltetrahydrophthalic anhydride is preferably used.

In this embodiment, the alkyd resin preferably has a structure derived from an alicyclic polybasic acid in an amount of 20% by mass or more and 45% by mass or less.

An esterification reaction is performed using the acrylic vinyl-based polymer segment (a1) and the alkyd segment (a2) thus obtained, and the reaction product and an aqueous medium are mixed and stirred to afford a polyester resin dispersion (A).

The proportion of the acrylic vinyl-based polymer segment (a1) in the alkyd resin, that is, the proportion of the acrylic vinyl polymer segment in the total of the acrylic vinyl-based polymer segment (a1) and the alkyd segment (a2) is preferably 20% by mass or more and 50% by mass or less. This makes it easier to control the viscosity. The proportion of the acrylic vinyl-based polymer segment is more preferably 20% by mass or more and 30% by mass or less in the total of the acrylic vinyl-based polymer segment (a1) and the alkyd segment (a2).

The amount of the polyester resin dispersion (A) contained in the aqueous coating composition is preferably 5 parts by mass or more and 80 parts by mass or less, more preferably 7 parts by mass or more and 75 parts by mass or less, and still more preferably 10 parts by mass or more and 70 parts by mass or less in terms of solid content, based on 100 parts by mass of the total resin solid content. When the amount of the polyester resin dispersion (A) is in the above range, there is an advantage that a viscosity change is small and good coating workability is more easily exhibited.

The resin solid content of the aqueous coating composition means a resin component, the melamine resin (B), and other curing agents that may be contained.

(2) Melamine resin (B)

The aqueous coating composition comprises a melamine resin (B). The melamine resin (B) is a component that functions as a curing agent in the aqueous coating composition. The melamine resin (B) has a structure in which groups $R^1$ to $R^6$ are bonded to the periphery of a melamine nucleus (triazine nucleus) via three nitrogen atoms as represented by the following formula (1). The melamine resin (B) may be composed of a polynuclear body in which a plurality of melamine nuclei are bonded to each other, or may be a mononuclear body made up of one melamine nucleus. The structure of the melamine nucleus constituting the melamine resin (B) can be represented by the following Formula (1).

[Chemical Formula 1]

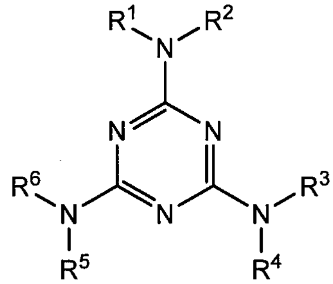

Formula (1)

In the above Formula (1), $R^1$ to $R^6$ each represent a hydrogen atom (imino group), $CH_2OH$ (methylol group), $CH_2OR^7$, or a bonding moiety with another melamine nucleus, which may be the same or different. $R^7$ is an alkyl group, preferably an alkyl group having 1 to 4 carbon atoms such as a methyl group, an ethyl group, a propyl group, or a butyl group.

Melamine resins can be roughly classified into water-soluble melamine resins and hydrophobic melamine resins. Here, the water-soluble melamine resin satisfies all of the following conditions (i) to (iii), for example.

(i) The melamine resin has a number average molecular weight of 1,000 or less.
(ii) Among $R^1$ to $R^6$ in the above Formula (1), at least one is a hydrogen atom (imino group) or $CH_2OH$ (methylol group). That is, the total of the average imino group amount and the average methylol group amount is 1.0 or more.
(iii) Among $R^1$ to $R^6$ in the above Formula (1), when $R^1$ to $R^6$ are $CH_2OR^7$, $R^7$ is a methyl group.

The number average molecular weight of the melamine resin is a value measured by GPC. More specifically, it is a value obtained by converting a value measured by a gel permeation chromatography (GPC) with a polystyrene standard.

The hydrophobic melamine resin is a melamine resin other than the water-soluble melamine resin, and for example, a melamine resin satisfying any one of the following conditions (iv) to (vi) is applicable.

(iv) The number average molecular weight of the melamine resin is more than 1,000.
(v) The total of the average imino group amount and the average methylol group amount is 1.0 or less.
(vi) Among $R^1$ to $R^6$ in the above Formula (1), two or more of $R^1$ to $R^6$ are $CH_2OR^7$, $R^7$ is an alkyl group having 1 to 4 carbon atoms, provided that at least one of $R^7$s constituting $R^1$ to $R^6$ is an alkyl group having 2 to 4 carbon atoms.

The melamine resin (B) comprises a hydrophobic melamine resin. The melamine resin (B) is preferably a hydrophobic melamine resin. The use of the hydrophobic melamine resin offers an advantage that the occurrence of mix of layers during wet-on-wet application can be effectively prevented.

As the melamine resin (B), a commercially available product may be used. Specific examples of a commercially available product include CYMEL series (trade name) manufactured by Allnex, specifically,

CYMEL 202, CYMEL 204, CYMEL 211, CYMEL 232, CYMEL 235, CYMEL 236, CYMEL 238, CYMEL 250, CYMEL 251, CYMEL 254, CYMEL 266, CYMEL 267, CYMEL 285 (these are melamine resins having both a methoxy group and a butoxy group);

MYCOAT 506 (melamine resin having a butoxy group alone, manufactured by Mitsui Cytec Ltd.); U-VAN 20N60 and U-VAN 20 SE (U-VAN (trade name) series manufactured by Mitsui Chemicals, Inc.).

These may be used singly, or two or more of them may be used in combination. Of these, CYMEL 202, CYMEL 204, CYMEL 211, CYMEL 250, CYMEL 254, and MYCOAT 212 are more preferable.

The amount of the melamine resin (B) contained in the aqueous coating composition is preferably 10 parts by mass and 60 parts by mass or less, and more preferably 20 parts by mass and 50 parts by mass or less, based on 100 parts by mass of the total resin solid content. The condition that the amount of the melamine resin (B) is in the above range is advantageous in that a good curing performance of the aqueous coating composition can be secured.

(3) Other resin components

The aqueous coating composition may comprise other resin component, as necessary. Examples of such other resin component include a polyacrylic resin and a polyurethane resin dispersion. The polyacrylic resin may be a polyacrylic resin emulsion or may be a polyacrylic resin dispersion. In one embodiment, the aqueous coating composition may contain one or more dispersions selected from the group consisting of a polyacrylic resin dispersion and a polyurethane resin dispersion.

The polyacrylic resin emulsion can be prepared by polymerization of various polymerizable monomers. The polymerizable monomer refers to a monomer having at least one unsaturated bond such as a vinyl group in the molecule, and includes a derivative of acrylic acid or methacrylic acid. The polymerizable monomer is not particularly limited, and examples thereof include:

ethylenically unsaturated carboxylic acid monomers such as (meth)acrylic acid, maleic acid, and itaconic acid;
ethylenically unsaturated carboxylic acid alkyl ester monomers such as methyl (meth)acrylate, ethyl (meth)acrylate, n-butyl (meth)acrylate, 2-ethylhexyl (meth)acrylate, cyclopentyl (meth)acrylate, and cyclohexyl (meth)acrylate;
ethylenically unsaturated dicarboxylic acid monoester monomers such as ethyl maleate, butyl maleate, ethyl itaconate, and butyl itaconate;
hydroxyl group-containing ethylenically unsaturated carboxylic acid alkyl ester monomers such as 2-hydroxyethyl (meth)acrylate, 2-hydroxypropyl (meth)acrylate, 4-hydroxybutyl (meth)acrylate, and a reaction product of 2-hydroxyethyl (meth)acrylate and ε-caprolactone;
ethylenically unsaturated carboxylic acid aminoalkyl ester monomers such as aminoethyl (meth)acrylate, dimethylaminoethyl (meth)acrylate, and butylaminoethyl (meth)acrylate;
ethylenically unsaturated carboxylic acid aminoalkylamide monomers such as aminoethyl (meth)acrylamide, dimethylaminomethyl (meth)acrylamide, and methylaminopropyl (meth)acrylamide;
other amide group-containing ethylenically unsaturated carboxylic acid monomers such as acrylamide, methacrylamide, dimethylacrylamide, diethylacrylamide, acryloylmorpholine, isopropylacrylamide, N-methylolacrylamide, methoxybutylacrylamide, and diacetone acrylamide;
unsaturated fatty acid glycidyl ester monomers such as glycidyl acrylate and glycidyl methacrylate;
vinyl cyanide-based monomers such as (meth)acrylonitrile and α-chloracrylonitrile;
saturated aliphatic carboxylic acid vinyl ester monomers such as vinyl acetate and vinyl propionate; and
styrene-based monomer such as styrene, α-methylstyrene, and vinyltoluene.

These may be used singly, or two or more of them may be used in combination.

The polyacrylic resin emulsion can be prepared, for example, by copolymerizing a monomer mixture comprising an ethylenically unsaturated carboxylic acid monomer and another monomer copolymerizable with the ethylenically unsaturated carboxylic acid monomer.

The polyacrylic resin emulsion can be prepared, for example, by a method in which a polymer to form a polyacrylic resin is formed by emulsion polymerization in an aqueous solvent in the presence of an emulsifier and a polymerization initiator.

Examples of the emulsifier that can be used for the emulsion polymerization include anionic emulsifiers such as soap, alkylsulfonate salts, and polyoxyethylene alkyl sulfate salts. Further, nonionic emulsifiers such as polyoxyethylene alkyl ethers, polyoxyethylene alkylphenyl ethers, polypropylene glycol ethylene oxide adducts, polyethylene glycol fatty acid esters, and polyoxyethylene sorbitan fatty acid esters can also be used.

As the emulsifier, a surfactant having a radically polymerizable carbon-carbon double bond (hereinafter, referred to as a reactive emulsifier) can also be used. Examples of the reactive emulsifier include a nonionic surfactant having a polyoxyethylene alkylphenyl ether as a basic structure and a radically polymerizable propenyl group introduced into a hydrophobic group, a cationic surfactant having a quaternary ammonium salt structure, and an anionic surfactant containing a sulfonic acid group, a sulfonate group, a sulfate ester group, and/or an ethyleneoxy group and having a radically polymerizable carbon-carbon double bond.

As the emulsifier, commercially available products thereof may be used. Examples of commercially available emulsifiers include Aqualon HS series (manufactured by DKS Co. Ltd.) such as Aqualon HS-10; Aqualon RN series

(manufactured by DKS Co. Ltd.); Eleminol JS-2 (manufactured by Sanyo Chemical Industries, Ltd.); LATEMUL Series (manufactured by Kao Corporation) such as LATEMUL S-120, S-180A, and PD-104, and EMULGEN Series (manufactured by Kao Corporation) such as EMULGEN 109P; Newcol series (manufactured by Nippon Nyukazai Co., Ltd.) such as Newcol 706 and 707SN; Antox series (manufactured by Nippon Nyukazai Co., Ltd.) such as Antox MS-2N (2-sodium sulfoethyl methacrylate); and ADEKA REASOAP Series (manufactured by ADEKA CORPORATION) such as ADEKA REASOAP NE-10 ($\alpha$-[1-[(allyloxy)methyl]-2-(nonylphenoxy)ethyl]-$\omega$-hydroxypolyoxyethylene).

Emulsifiers may be used singly, or two or more of them may be used in combination. When an emulsifier is used, the amount of the emulsifier used is preferably 0.5 parts by mass or more and 10 parts by mass or less in terms of solid content based on 100 parts by mass of the polymerizable monomer.

In the preparation of the polyacrylic resin emulsion by emulsion polymerization, it is preferable to use a polymerization initiator. The polymerization initiator generates a radical by heat or a reducing substance or the like to additionpolymerize monomers, and a water-soluble polymerization initiator or an oil-soluble polymerization initiator can be used. The water-soluble polymerization initiator is not particularly limited, and examples thereof include persulfate salt-based initiators such as ammonium persulfate, sodium persulfate, and potassium persulfate, and inorganic initiators such as hydrogen peroxide. The oil-soluble polymerization initiator is not particularly limited, and examples thereof include organic peroxides such as benzoyl peroxide, t-butyl peroxybenzoate, t-butyl hydroperoxide, t-butyl peroxy(2-ethylhexanoate), t-butyl peroxy-3,5,5-trimethylhexanoate, and di-t-butyl peroxide; and azobis compounds such as 2,2'-azobisisobutyronitrile, 2,2'-azobis-2,4-dimethylvaleronitrile, 2,2'-azobis(4-methoxy-2,4-dimethylvaleronitrile), and 1,1'-azobis-cyclohexane-1-carbonitrile. These may be used singly, or two or more of them may be used in combination.

The amount of the polymerization initiator to be used is preferably 0.01% by mass or more and 10% by mass or less based on the total amount of the monomers to be used for the polymerization. The polymerization temperature in the emulsion polymerization is, for example, 30°C or higher and 90°C or lower, and the polymerization time is, for example, 3 hours or more and 12 hours or less. The monomer concentration during the polymerization reaction is, for example, 30% by mass or more and 70% by mass or less.

The polyacrylic resin emulsion may have a multilayer structure composed of a core part and a shell part. The polyacrylic resin emulsion having such a multilayer structure can be prepared, for example, by a known production method described in JP-A-2002-12816.

The polyacrylic resin emulsion may also be prepared by mixing a mixture of polymerizable monomers, an emulsifier, and an aqueous medium before emulsion polymerization to prepare a pre-reaction emulsified mixture. In the case of preparing a pre-reaction emulsified mixture, emulsion polymerization can be performed by mixing the pre-reaction emulsion mixture and a polymerization initiator in an aqueous medium.

After the emulsion polymerization, neutralization may be performed using a neutralizer, as necessary. As the neutralizer, an inorganic base and/or an organic base can be used. Specific examples of the inorganic base or the organic base include ammonia, triethylamine, propylamine, dibutylamine, amylamine, 1-aminooctane, 2-dimethylaminoethanol, ethylaminoethanol, 2-diethylaminoethanol, 1-amino-2-propanol, 2-amino-1-propanol, 2-amino-2-methyl-1-propanol, 3-amino-1-propanol, 1-dimethylamino-2-propanol, 3-dimethylamino-1-propanol, 2-propylaminoethanol, ethoxypropylamine, aminobenzyl alcohol, morpholine, sodium hydroxide, and potassium hydroxide. Neutralizers may be used singly, or two or more of them may be used in combination. Preferably, the neutralizer is usually used in an amount of 0.2 mol or more and 1.0 mol or less per mol of the carboxyl groups in the copolymer (neutralization ratio: 20% or more and 100% or less).

The polyacrylic resin emulsion preferably has an acid value of 5 mg KOH/g or more and 200 mg KOH/g or less, and more preferably 5 mg KOH/g or more and 70 mg KOH/g or less. When the acid value is in the above range, the stability of the resin emulsion in water and the water resistance of a coating film can be balanced. In the present specification, the acid value represents a solid acid value, and can be measured by a known method described in JIS K0070 : 1992.

The polyacrylic resin emulsion preferably has a hydroxyl value of 0 mg KOH/g or more and 85 mg KOH/g or less, and more preferably 0 mg KOH/g or more and 40 mg KOH/g or less. The fact that the hydroxyl value is 85 mg KOH/g or less offers an advantage that the water resistance of a coating film can be secured. In the present specification, the hydroxyl value represents a solid hydroxyl value, and can be measured by a known method described in JIS K0070 : 1992.

The polyacrylic resin may be a polyacrylic resin dispersion. The acrylic dispersion can be prepared, for example, by a method in which a monomer mixture comprising the monomers described above is solution-polymerized in an organic solvent using a radical polymerization initiator, and then the resulting polymer solution is neutralized with a neutralizer and subjected to phase transition with water.

Specific examples of the radical polymerization initiator that can be used for solution polymerization include azobisisobutyronitrile, benzoyl peroxide, t-butyl perbenzoate, t-butyl hydroperoxide, di-t-butyl peroxide, and cumene hydroperoxide. Radical polymerization initiators may be used singly, or two or more of them may be used in combination. The molecular weight of the resin may, as necessary, be adjusted using a chain transfer agent such as octyl mercaptan

or dodecyl mercaptan.

As the neutralizer to be used for neutralizing the polymer obtained by solution polymerization, the above-described neutralizer can be used. Preferably, the neutralizer is usually used in an amount of 0.2 mol or more and 1.0 mol or less per mol of the carboxyl groups in the copolymer (neutralization ratio: 20% or more and 100% or less).

The polyacrylic resin dispersion preferably has an acid value of 5 mg KOH/g or more and 200 mg KOH/g or less, and more preferably 5 mg KOH/g or more and 70 mg KOH/g or less. The polyacrylic resin dispersion preferably has a hydroxyl value of 0 mg KOH/g or more and 85 mg KOH/g or less, and more preferably 0 mg KOH/g or more and 40 mg KOH/g or less.

The polyacrylic resin dispersion may have a core-shell structure. The polyacrylic resin dispersion having a core-shell structure can be produced by

- a step of solution-polymerizing a core part preparation monomer to form a core part of a polyacrylic resin dispersion;
- a step of solution-polymerizing a shell part preparation monomer comprising an acid group-containing polymerizable monomer in the presence of the obtained core part to form a shell part of a polyacrylic resin dispersion;
- a step of desolvating the obtained solution polymerization product and neutralizing it with a neutralizer such as a base compound; and
- a step of mixing the polymerization product neutralized and an aqueous medium and dispersing the polymerization product in the aqueous medium.

When the aqueous coating composition contains the polyacrylic resin dispersion, the amount of the polyacrylic resin dispersion contained in the aqueous coating composition is preferably 1 part by mass or more and 30 parts by mass or less, and more preferably 3 parts by mass or more and 25 parts by mass or less in terms of solid content based on 100 parts by mass of the total resin solid content.

The polyurethane resin dispersion can be prepared by dispersing in water a polyurethane resin prepared using a polyol compound, a compound having an active hydrogen group and a hydrophilic group in the molecule, an organic polyisocyanate, and as necessary, a chain extender and a polymerization terminator.

The polyol compound is not particularly limited as long as it has two or more hydroxyl groups, and examples thereof include polyhydric alcohols such as ethylene glycol, propylene glycol, 1,4-butanediol, 1,6-hexanediol, trimethylolpropane, and glycerol; polyether polyols such as polyethylene glycol, polypropylene glycol, and polytetramethylene ether glycol; polyester polyols obtained from a dicarboxylic acid such as adipic acid, sebacic acid, itaconic acid, maleic anhydride, phthalic acid, and isophthalic acid, and a glycol such as ethylene glycol, triethylene glycol, propylene glycol, butylene glycol, tripropylene glycol, and neopentyl glycol; polycaprolactone polyol; polybutadiene polyol; polycarbonate polyol; and polythioether polyol. The polyol compound may be used singly, or two or more species thereof may be used in combination.

Examples of the compound having an active hydrogen group and a hydrophilic group in the molecule include compounds known as compounds containing active hydrogen and an anionic group {an anionic group or an anion-forming group (a group that reacts with a base to form an anionic group and, in this case, that is converted into an anionic group by neutralizing with a base before, during or after a urethanization reaction)} (those disclosed in JP-B-42-24192 and JP-B-55-41607; specific examples include $\alpha,\alpha$-dimethylolpropionic acid and $\alpha,\alpha$-dimethylolbutyric acid), compounds known as compounds having active hydrogen and a cationic group in the molecule (e.g., those disclosed in JP-B-43-9076), and compounds known as compounds having active hydrogen and a nonionic group (e.g., those disclosed in JP-B-48-41718; specifically, polyethylene glycol and alkylalcohol alkylene oxide adducts, etc.).

The organic polyisocyanate is not particularly limited as long as it has two or more isocyanate groups in the molecule, and examples thereof include aliphatic diisocyanates such as 1,4-tetramethylene diisocyanate, 1,6-hexamethylene diisocyanate, 2,2,4-trimethylhexamethylene diisocyanate, 3-isocyanatomethyl-3,5,5-trimethylcyclohexyl isocyanate, dicyclohexylmethane-4,4'-diisocyanate, methylcyclohexyl-2,4-diisocyanate, methylcyclohexyl-2,6-diisocyanate, xylylene diisocyanate, 1,3-bis(isocyanate)methylcyclohexane, tetramethylxylylene diisocyanate, transcyclohexane-1,4-diisocyanate, and lysine diisocyanate; aromatic diisocyanates such as 2,4-toluylene diisocyanate, 2,6-toluylene diisocyanate, diphenylmethane-4,4'-diisocyanate, 1,5'-naphthene diisocyanate, tolidine diisocyanate, diphenylmethylmethane diisocyanate, tetraalkyldiphenylmethane diisocyanate, 4,4'-dibenzyl diisocyanate, and 1,3-phenylene diisocyanate; and triisocyanates such as lysine ester triisocyanate, triphenylmethane triisocyanate, 1,6,11-undecane triisocyanate, 1,8-diisocyanate-4,4-isocyanate methyloctane, 1,3,6-hexamethylene triisocyanate, and bicycloheptane triisocyanate. These polyisocyanates may be used in the form of dimer or trimer thereof (isocyanurate linkage), and may be reacted with an amine and used as a biuret. Moreover, it is also possible to use polyisocyanates having a urethane linkage resulting from reacting such polyisocyanate compounds with polyols.

The chain extender that may be added as necessary during the preparation of the polyurethane resin dispersion is not particularly limited as long as it contains two or more active hydrogen groups, and examples thereof include low-molecular polyols (for example, ethylene glycol, propylene glycol, 1,4-butanediol, 3-methylpentanediol, 2-ethyl-1,3-hexanediol, and trimethylolpropane), polyamines (for example, ethylenediamine, hexamethylenediamine, diethylenetriamine, hydrazine, xylylenediamine, and isophoronediamine).

Examples of the polymerization terminator include a compound having one active hydrogen in the molecule (for example, monoalcohols and monoamines) and monoisocyanate compounds.

A reaction method in producing the aqueous polyurethane resin (D) may be any method of a one-shot method in which the respective components are reacted at once and a multistage method in which the respective components are reacted in steps {a method of producing the resin by reacting part of an active hydrogen-containing compound (e.g., high-molecular polyol) with a polyisocyanate, thereby forming an NCO terminated prepolymer, and then reacting the remainder of the active hydrogen-containing compound}. The reaction of synthesizing the polyurethane resin is performed usually at 40 to 140°C, preferably 60 to 120°C. In order to accelerate the reaction, there may be used a catalyst that is usually used for a urethanization reaction, such as a tin-based catalyst including dibutyltin laurate and tin octylate or an aminebased catalyst including triethylenediamine. In addition, the above reaction may be carried out in an organic solvent that is inert to isocyanate (e.g., acetone, toluene, dimethylformamide, etc.), and the solvent may be added either during the reaction or after the reaction.

The polyurethane resin dispersion can be prepared by treating a resulting polymer with a known method (a method of forming an anionic group by neutralization with a base in the case of an anion-forming group, a method of forming a cationic group with a quaternarizing agent or a method of forming a cationic group by neutralization with an acid in the case of a cation-forming group) and then dispersing the polymer in water.

When the aqueous coating composition contains the polyurethane resin dispersion, the amount of the polyurethane resin dispersion contained in the aqueous coating composition is preferably 5 parts by mass or more and 60 parts by mass or less, and more preferably 5 parts by mass or more and 50 parts by mass or less in terms of solid content based on 100 parts by mass of the total resin solid content.

(4) Other components

The aqueous coating composition may comprise other components, as necessary, in addition to the above-described components. Examples of such other components include pigments, film-forming assistants, surface conditioning agents, antiseptic agents, fungicides, defoaming agents, light stabilizers, ultraviolet absorbers, antioxidants, and pH adjusters.

The pigment is not particularly limited, and examples thereof include: organic coloring pigments such as azo chelate pigments, insoluble azo pigments, condensed azo pigments, monoazo pigments, disazo pigments, diketopyrrolopyrrole pigments, benzimidazolone pigments, phthalocyanine pigments, indigo pigments, thioindigo pigments, perinone pigments, perylene pigments, dioxane pigments, quinacridone pigments, isoindolinone pigments, naphthol pigments, pyrazolone pigments, anthraquinone pigments, anthrapyrimidine pigments, and metal complex pigments; inorganic coloring pigments such as chrome yellow, yellow iron oxide, chromium oxide, molybdate orange, red iron oxide, titanium yellow, zinc flower, carbon black, titanium dioxide, cobalt green, phthalocyanine green, ultramarine, cobalt blue, phthalocyanine blue, and cobalt violet; mica pigments (titanium dioxide-coated mica, colored mica, metal-plated mica); graphite pigment, alumina flake pigment, metal titanium flakes, stainless flakes, plate-like iron oxide, phthalocyanine flakes, metal-plated glass flakes, other colored and colored flat pigments; and extender pigments such as titanium oxide, calcium carbonate, barium sulfate, barium carbonate, magnesium silicate, clay, talc, silica, and calcined kaolin.

[Preparation of aqueous coating composition]

The method for preparing the aqueous coating composition is not particularly limited, and the aqueous coating composition can be prepared by stirring the above-described components with a stirrer or the like. When a pigment, etc. are contained in the aqueous coating composition, those having good dispersibility can be mixed with a stirrer, and as another method, those previously dispersed in a vehicle comprising water, a surfactant, a dispersant, etc. with a sand grind mill or the like can be added.

The aqueous coating composition is not particularly limited in its application method and drying conditions, and those which are commonly well-known can be applied. The aqueous coating composition can be used for various uses, and it exhibits superior performance especially under normal temperature drying to forced drying conditions. The forced drying generally means heating at about 80°C, but may be heating up to about 150°C, for example.

The article to be coated to which the aqueous coating composition of the present invention is applied is not particularly limited, and examples thereof include metal substrates such as iron, stainless steel and the like and surface-treated products thereof, cement substrates such as gypsum, and plastic substrates such as polyesters and acrylic plastics. Further examples include various articles for construction such as building materials and structures, various articles for the automobile industry such as automobile bodies and parts, and various articles for industrial fields such as electric appliances and electronic parts.

In the aqueous coating composition, as to the viscosity of a dry coating film of the coating composition, a coating film viscosity $\eta 1$ of a dry coating film whose solid content is 60% by mass and a coating film viscosity $\eta 2$ of a dry coating film whose solid content is 80% by mass satisfy the following condition:

$$1 \leq \eta 2/\eta 1 \leq 10.$$

The coating film viscosities $\eta 1$ and $\eta 2$ are shear viscosities measured at a temperature of 25°C, at a shear rate of 0.1 $s^{-1}$ using a rotary viscoelasticity analyzer.

The method of measuring the viscosity by increasing the solid content of an uncured coating material may, for example, be the following method. A coated sheet with an uncured coating film formed thereon is adjusted to have solid contents of 60 ± 3% and 80 ± 3% using, for example, a vacuum desolvation apparatus and the viscosity is measured at a temperature of 25°C and a shear rate of 0.1 $s^{-1}$ using a rotary viscoelasticity analyzer.

In the present description, for example, "the solid content in a dry coating film is 60% by mass" means that a state where the solid content is 60 ± 3% by mass, and for example, "the solid content in a dry coating film is 80% by mass" means that a state where the solid content is 80 ± 3% by mass.

In the present description, "a dry coating film of a coating composition" means a state where at least a part of the solvent contained in the coating composition has been evaporated after the coating composition has been applied to an article to be coated.

That the coating film viscosities $\eta 1$ and $\eta 2$ of the aqueous coating composition satisfy the above conditions means that viscosity change is small even when the solid content in a dry coating film falls in the above range and the amount of the solvent contained in the coating composition decreases. That the viscosity change is small even when the amount of the solvent decreases offers an advantage that a change in coating workability when the viscosity changes can be reduced. Such an aqueous coating composition has an advantage that it exhibits good coating workability even under various coating environments differing in temperatures and/or humidity.

[Method for forming multilayer coating film]

The aqueous coating composition according to any embodiment of the present invention can be suitably used, for example, in the formation of a multilayer coating film. The method for forming a multilayer coating film may be, for example, a method for forming a multilayer coating film according to an embodiment of the present invention, described below.

The method for forming a multilayer coating film according to an embodiment of the present invention comprises: step (1) of applying a first aqueous base coating composition according to an embodiment of the present invention to a surface of an article to be coated to obtain an uncured first aqueous base coating film; step (2) of applying a second aqueous base coating composition to the uncured first aqueous base coating film to form an uncured second aqueous base coating film; step (3) of applying a clear coating composition to the uncured second aqueous base coating film to form an uncured clear coating film; and step (4) of heating and curing the uncured first aqueous base coating film, the uncured second aqueous base coating film, and the uncured clear coating film obtained in the steps (1) to (3) at one time to form a multilayer coating film.

This method for forming a multilayer coating film according to an embodiment of the present invention is a method in which application is sequentially performed with coating films being in an uncured state, and this is a so-called wet-on-wet application method. Wet-on-wet application is advantageous in terms of economy and environmental impact because it can omit a baking drying oven.

The first aqueous base coating composition can be applied by application methods commonly used in the coating material field. Examples of such application methods include multistage application, preferably two-stage application, with use of air-electrostatic spray application, or application combining air electrostatic spray application and a rotary atomization type electrostatic applicator. The thickness of the first aqueous base coating film is preferably in a range of 3 μm or more and 40 μm or less.

Drying or preheating may, as necessary, be carried out after applying the first aqueous base coating composition and before applying the second aqueous base coating composition.

In another embodiment, after the application of the first aqueous base coating composition, the resulting coating film may be heat cured and then followed by the application of the second aqueous base coating composition onto the cured first aqueous base coating film.

As the second aqueous base coating composition, for example, an aqueous base coating composition commonly used for the coating of automobile bodies can be used. Examples of such a second aqueous base coating composition include one comprising a coating film-forming resin, a curing agent, a pigment such as a luster pigment, a coloring pigment, and an extender pigment, and additives with these ingredients being solved or dispersed in an aqueous medium.

The second aqueous base coating material is not particularly limited with respect to its form as long as it is aqueous and, for example, it may be in the form of a water-soluble form, a water-dispersion form, an emulsion form, or the like.

The second aqueous base coating material may be applied by the same method as that of the first aqueous base coating material. The thickness of the second aqueous base coating film is preferably in a range of 3 μm or more and 20 μm or less. Drying or preheating may, as necessary, be carried out after applying the second aqueous base coating composition and before applying the clear coating composition.

In another embodiment, after the application of the second aqueous base coating composition, the resulting coating film may be heat cured and then followed by the application of a clear coating composition onto the cured second aqueous base coating film.

As the clear coating composition, for example, a composition that is commonly used as a clear coating composition for an automobile body can be used. Examples of such a clear coating composition include a composition comprising a coating film-forming resin and, as necessary, a curing agent and other additives with these ingredients being dispersed or dissolved in a medium. Examples of the coating film-forming resin include a polyacrylic resin, a polyester resin, an epoxy resin, and a polyurethane resin. These can be used in combination with a curing agent such as an amino resin and/or an isocyanate resin. From the viewpoints of transparency or acidresistant etching property, it is preferable to use a combination of a polyacrylic resin and/or a polyester resin and an amino resin, or a polyacrylic resin and/or a polyester resin having a carboxylic acid/epoxy curing system.

The application of the clear coating composition can be carried out using an application method known to those skilled in the art according to the mode of application of the clear coating composition. In general, the dry thickness of a clear coating film to be formed by applying the above-described clear coating composition is preferably 10 μm or more and 80 μm or less, and more preferably 20 μm or more and 60 μm or less.

By heat curing an uncured clear coating film resulting from the application of a clear coating composition, a cured clear coating film can be formed. When the clear coating composition has been applied onto an uncured second aqueous base coating film, the uncured coating film is to be heat cured by heating. The heat curing temperature is preferably set to 80°C or higher and 180°C or lower, and more preferably 120°C or higher or 160°C or lower, from the viewpoint of curability and physical properties of a resulting multilayer coating film. The heat curing time may be set arbitrarily according to the above-mentioned temperature. Examples of the heat curing conditions include conditions where heating is performed at a heat curing temperature of 120°C or higher and 160°C or lower for 10 minutes or more and 30 minutes or less.

## EXAMPLES

The present invention will be described hereafter in more detail by way of examples, to which the present invention is not intended to be limited. In the examples, "parts" and "%" are on a mass basis unless otherwise indicated.

(Production Example 1) Production of polyester resin dispersion (1)

[Synthesis of acrylic vinyl-based polymer segment (a1)]

A reaction vessel equipped with a stirrer, a thermometer, an inert gas introduction tube, a dropping funnel, and a reflux condenser was charged with 260 parts by mass of initial solvent xylene and 260 parts by mass of dehydrated castor oil, and the temperature was raised to 130°C. Thereafter, a mixture of 34 parts by mass of styrene, 22 parts by mass of n-butyl methacrylate, 22 parts by mass of 2-ethylhexyl methacrylate, 22 parts by mass of methacrylic acid, 1 part by mass of t-butyl peroxy-2-ethylhexanoate, and 1 part by mass of tertiary-amyl peroxy-2-ethylhexanoate was added dropwise over 3 hours. After further holding for 3 hours, the temperature was lowered, affording a vinyl polymer (a1) having a solid acid value of 160 mg KOH/g.

[Synthesis of alkyd segment (a2)]

A reaction vessel equipped with a stirrer, a thermometer, an inert gas introduction tube, and a glassy multistage fractionator was charged with 5 parts by mass of coconut fatty acid, 30 parts by mass of trimethylolpropane, 15 parts by mass of 1,6-hexanediol, and 50 parts by mass of hexahydrophthalic anhydride, and the temperature was raised while nitrogen gas was introduced. The temperature was raised to 240°C over 4 hours after reaching 180°C, and the reaction was continued until the acid value reached 6 mg KOH/g, affording an alkyd segment (a2).

[Synthesis of polyester resin dispersion (1)]

A reaction vessel equipped with a stirrer, a thermometer, an inert gas introduction tube, and a catcher vessel

for collecting a volatile solvent was charged with 350 parts by mass (solid content) of the acrylic vinyl-based polymer segment (a1) and 160 parts by mass (solid content) of the alkyd segment (a2), and the temperature was raised to 200°C. Subsequently, the volatiles were removed under reduced pressure, and then an esterification reaction was performed at the same temperature until the acid value reached 28, affording an alkyd resin having an acrylic vinyl-based polymer segment. To this was added 24 parts by mass of propylene glycol monopropyl ether, then 14 parts by mass of dimethylethanolamine was added and the mixture was well mixed at 60°C. While the temperature of 60°C was held, 570 parts by mass of ion-exchanged water (solvent) was intermittently added, affording a translucent polyester resin dispersion (A-1) having a nonvolatile content of 42% by mass and a pH of 8.9. The polyester resin constituting the polyester resin dispersion (A-1), that is, the alkyd resin had a number average molecular weight of 2000, a weight average molecular weight of 30000, an acid value of 26 mg KOH/g, and a hydroxyl value of 90 mg KOH/g, and the alkyd resin contained a structure derived from the alicyclic polybasic acid in an amount of 43% by mass.

The acid value and the hydroxyl value were measured by the method described in JIS K 0070: 1992. The number average molecular weight and the weight average molecular weight were determined in terms of polystyrene by a GPC apparatus using a TSK-gel-supermultipor HZ-M (manufactured by Tosoh Corporation) column and THF as a developing solvent. The pH was measured at 25°C using a pH Meter M-12 [manufactured by HORIBA, Ltd.]. Hereinafter, the same applies to the present Example.

(Production Examples 2 to 8) Production of polyester resin dispersions (2) to (8)

Polyester resin dispersions (2) to (8) were produced in the same manner as in Production Example 1 except that the composition was changed as shown in Table 1.

[Table 1]

| | Polyester resin dispersion | | | | | | | |
|---|---|---|---|---|---|---|---|---|
| | (1) | (2) | (3) | (4) | (5) | (6) | (7) | (8) |
| Proportion of acrylic vinyl-based polymer segment (% by mass) | 22 | 26 | 26 | 50 | 20 | 75 | 75 | 100 |
| Proportion of alkyd segment (% by mass) | 78 | 74 | 74 | 50 | 80 | 25 | 25 | 0 |
| Proportion of alicyclic polybasic acid (% by mass) | 43 | 24 | 33 | 20 | 0 | 35 | 0 | 0 |

(Production Example 10) Production of polyacrylic resin dispersion

[Preparation step 1]

A reactor equipped with a stirring device, a cooling device, and a heating device was charged with 210 parts by mass of butyl acetate and heated to 120°C. Thereafter, a monomer mixture composed of 73.65 parts by mass of styrene (ST), 178.96 parts by mass of methyl methacrylate (MMA), 75.94 parts by mass of n-butyl acrylate (BA), 64.45 parts by mass of 2-ethylhexyl acrylate, 105.00 parts by mass of hydroxyethyl methacrylate (HEMA), and 2.0 parts by mass of acrylic acid (AA) and a solution prepared by dissolving 70 parts by mass of tert-butyl peroxy-2-ethylhexanate in 45 parts by mass of butyl acetate were dropped from two lines at constant rates over 90 minutes. Thereafter, the mixture was cooled to 60°C, affording a core polymer (core part).

[Preparation step 2]

Subsequently, 210 parts by mass of butyl acetate was charged into a reactor equipped with a cooling device and a heating device and heated to 120°C. Thereafter, a monomer mixture composed of 835.00 parts by mass of the core polymer obtained in the step (1), 73.65 parts by mass of styrene (ST), 178.96 parts by mass of methyl methacrylate (MMA), 75.94 parts by mass of n-butyl acrylate (BA), 64.45 parts by mass of 2-ethylhexyl acrylate (2-EHA), 105.00 parts by mass of hydroxyethyl methacrylate (HEMA), and 20.0 parts by mass of acrylic acid (AA) and a solution prepared by dissolving 140 parts by mass of tert-butyl peroxy-2-ethylhexanate in 120 parts by mass of butyl acetate were dropped from two lines at constant rates over 90 minutes.

[Preparation step 3]

The reaction mixture was kept at 120°C for 30 minutes, and a solution prepared by dissolving 3 parts by mass of tert-butyl peroxy-2-ethylhexanate in 80 parts by mass of butyl acetate was dropped from a single line at a constant

rate over 30 minutes. After stirring at 120°C for 60 minutes, the mixture was cooled to 70°C to synthesize a core-shell polymer. The resulting core-shell polymer had a resin solid content of 58.5% by mass, and a weight-average molecular weight of 25,000.

[Preparation step 4]

Subsequently, 170 parts by mass of dipropylene glycol monomethyl ether was added to dilute. Butyl acetate was distilled off from the obtained core-shell polymer under reduced pressure until the solid content reached 85% by mass. To this was added 27.21 parts by mass of dimethylethanolamine (DMEA), and then 1680 parts by mass of water was added to prepare an acrylic resin dispersion. The resin solid content of the resulting acrylic resin dispersion was 36.5% by mass.

(Production Example 11) Production of polyurethane resin dispersion

A simple compression reaction apparatus equipped with a stirrer and a heating device was charged with 268.89 parts by mass of a high-molecular polyol, 9.58 parts by mass of a low-molecular polyol, 6.77 parts by mass of a compound having a hydrophilic group and active hydrogen, 68.98 parts by mass of an organic polyisocyanate, and 145.79 parts by mass of acetone, and the mixture was stirred at 95°C for 15 hours and subjected to a urethanization reaction. Thus, an acetone solution of a polyurethane resin was produced. While 500.00 parts of the obtained acetone solution of the polyurethane resin was stirred at 30°C, 5.09 parts by mass of triethylamine was added as a neutralizer, and the mixture was homogenized at 60 rpm for 30 minutes, then the temperature was maintained at 30°C, and 651.56 parts of ion-exchanged water was gradually added with stirring at 500 rpm. Thereby, the mixture was emulsified. Acetone was distilled off at 65°C over 12 hours under reduced pressure, water was then added, as necessary, to adjust the solid concentration to 35%, and the mixture was filtered through an SUS mesh having a mesh size of 100 μm to afford a polyurethane resin dispersion comprising a polyurethane resin.

(Production Example 12) Production of pigment dispersion paste

After preliminarily mixing 4.5 parts of a dispersant Disperbyk 190 (nonionic and anionic dispersant manufactured by BYK-Chemie), 0.5 parts of an antifoaming agent BYK-011 (antifoaming agent manufactured by BYK-Chemie), 22.9 parts by mass of ion-exchanged water, and 72.1 parts by mass of titanium dioxide, a glass bead medium was added in a paint conditioner, and mixed and dispersed at room temperature until the particle size reached 5 μm or less, and thus a pigment dispersion paste was obtained.

(Example 1) Production of aqueous coating composition (1)

After mixing 138.7 parts by mass of the pigment dispersion paste obtained in Production Example 12, 186.1 parts by mass (resin solid content: 80 parts) of the polyester resin dispersion (A-1) obtained in Production Example 1, and 28.6 parts by mass (resin solid content: 20 parts) of melamine resin (1) (CYMEL 250, melamine resin manufactured by Allnex, nonvolatile content: 70%, hydrophobic melamine resin) as a curing agent, 1 part by mass of ADEKA NOL UH814 (trade name; urethane-associated viscosity control agent manufactured by ADEKA Corporation) as a viscosity-adjusting agent, and 5 parts of ethylene glycol mono-2-ethylhexyl ether and 5 parts by mass of 2-ethylhexanol as hydrophilic organic solvents were mixed and stirred, and thus aqueous coating composition (1) of Example 1 was obtained.

(Examples 2 to 11 and Comparative Examples 1 to 7) Production of aqueous coating compositions (2 to 17)

Aqueous coating compositions (2) to (17) were prepared in the same manner as in Example 1 except that the type and the amount (solid amount) of the polyurethane resin dispersion and the melamine resin, and the presence or absence and the amount (solid amount) of the polyacrylic resin dispersion and the polyurethane resin dispersion were changed as shown in Tables 2 and 3.
The following evaluation tests were carried out using the aqueous coating compositions (1) to (17) obtained in the above Examples and Comparative Examples. The obtained results are shown in Tables 2 and 3.

(Method for measuring viscosity of coating film)

The viscosity of a coating film was measured according to the following procedure.
The aqueous coating compositions prepared in Examples and Comparative Examples were dried with a vacuum desolvation apparatus (ARV-310) manufactured by THINKY CORPORATION until the solid contents reached 60 ± 3%

and 80 ± 3%. Subsequently, the viscosity was measured with a viscometer (MCR-301) manufactured by Anton Paar GmbH at a temperature of 25°C and a shear rate of 0.1 $s^{-1}$.

As a parameter indicating the rate of viscosity change, η2/η1 was evaluated where the viscosity at which the solid content in the dry coating film was 60 ± 3% by mass is expressed by η1 and the viscosity at which the solid content in the dry coating film was 80 ± 3% by mass was expressed by η2. The evaluation criteria were as follows.

Evaluation criteria of viscosity (η2/η1)

⊙: 1 ≤ η2/η1 ≤ 5 (There is almost no difference in viscosity between a solid content of 60% by mass and a solid content of 80% by mass.)
O: 5 < η2/η1 ≤ 10 (There is a slight difference in viscosity between a solid content of 60% by mass and a solid content of 80% by mass.)
Δ: 10 < η2/η1 ≤ 15 (There is a difference in viscosity between a solid content of 60% by mass and a solid content of 80% by mass.)
×: 15 < η2/η1 (There is a very large difference in viscosity between a solid content of 60% by mass and a solid content of 80% by mass.)

(Evaluation of coating film appearance)

[Formation of multilayer coating film]

POWERNICS150 (trade name, cationic electrodeposition coating material produced by Nippon Paint Automotive Coatings Co., Ltd.) was electrodeposited such that a dry coating film thickness of 20 μm was achieved on a dull steel sheet treated with zinc phosphate, followed by heat-curing at 160°C for 30 minutes and subsequent cooling, and thus a cured electrodeposition coating film was formed.

On the resulting electrodeposition coating film, any one of the aqueous coating compositions (1) to (17) was applied with a rotary atomization type electrostatic applicator such that the dry film thickness was 20 μm thick, and subsequently, AQUAREX AR-2100 NH-700 (trade name, aqueous metallic base coating material manufactured by Nippon Paint Automotive Coatings Co., Ltd.) as a second aqueous base coating composition was applied with a rotary atomization type electrostatic applicator such that the dry film thickness was 10 μm in thickness, followed by preheating at 80°C for 3 minutes.

The aqueous coating composition was applied under two different conditions, namely, through the step of applying it under the wet condition defined by a temperature of 15°C and a humidity of 80% and then applying the second base coating composition under the condition of 25°C and 60%, and through the step of applying the aqueous coating composition under the dry condition defined by a temperature of 30°C and a humidity of 50% and then applying the second base coating composition under the condition of 25°C and 60%. The aqueous coating composition was applied after an interval of 6 minutes from the application of the second base coating composition.

Further, PU EXCEL 0-2100 (trade name, two-component clear coating material manufactured by Nippon Paint Automotive Coatings Co., Ltd.) as a clear coating composition was applied to the coated sheet with a rotary atomization type electrostatic applicator such that the dry film thickness was 35 μm thick, followed by heat curing at 140°C for 30 minutes, and thus two types of multilayer coating film specimens differing in the application condition for the aqueous coating compositions (1) to (17).

The aqueous coating compositions (1) to (17), the second aqueous base coating composition, and the clear coating material were diluted under the following conditions.

- Aqueous coating compositions (1) to (17)

  Diluent solvent: ion-exchanged water
  40 seconds/NO. 4 Ford cup/20°C

- Second aqueous base coating composition

  Diluent solvent: ion-exchanged water
  45 seconds/NO. 4 Ford cup/20°C

- Clear coating composition

Diluent solvent: mixed solvent of EEP (ethoxyethyl propionate)/S-150 (aromatic hydrocarbon solvent manufactured by Exxon) = 1/1 (mass ratio)
30 seconds/NO. 4 Ford cup/20°C

[Method and criteria for evaluation of coating film appearance]

The finished appearance of the resulting multilayer coating films was evaluated by measuring SW (measurement wavelength: 300 to 1,200 μm) using a wave-scan DOI (manufactured by BYK Gardner). The difference in appearance between the appearance SW (WET) of a coating film applied under wet conditions and the appearance SW (DRY) of a coating film applied under dry conditions was used as an evaluation criterion.

Evaluation criteria for coating film appearance

⊙: SW (DRY) - SW (WET) ≤ 2 (There is almost no difference in appearance between the wet condition and the dry condition.)
O: 2 < SW (DRY) - SW (WET) ≤ 5 (There is a slight difference in appearance between the wet condition and the dry condition, but there is no problem.)
Δ: 5 < SW (DRY) - SW (WET) < 10 (There is a large difference in appearance between the wet condition and the dry condition.)
×: 10 < SW (DRY) - SW (WET) (There is a very large difference in appearance between the wet condition and the dry condition.)

(Evaluation of layer miscibility (flip-flop property))

The layer miscibility of the multilayer coating films prepared under the wet condition was evaluated using a flip-flop property. In a multilayer coating film good in layer miscibility, the orientation of the aluminum flakes contained in the second base coating is orderly arranged on the aqueous coating composition applied on a substrate, and the film is strong in flip-flop property. In a multilayer coating film poor in layer miscibility, the orientation of the aluminum flakes contained in the second base coating is randomly arranged on the aqueous coating composition applied on a substrate, and the film lacks flip-flop property.
As to the flip-flop property, L values at 15° (front) and 110° (shade) were measured by using an X-Rite MA68II (manufactured by X-Rite Inc.). The larger the difference is, the better the flip-flop property is.

Evaluation criteria for layer miscibility (flip-flop property)

⊙: 100 ≤ L value (15°) - L value (110°) (The L value difference between the front and the shade is large, and the flip-flop property is strong.)
O: 90 ≤ L value (15°) - L value (110°) < 100 (The L value between the front and the shade is slightly large, and the flip-flop property is slightly strong.)
Δ: 80 ≤ L value (15°) - L value (110°) < 90 (Mix of layers occurred, and the flip-flop property is weak.)
×: L value (15°) - L value (110°) < 80 (Mix of layers occurred violently, and the film lacks flip-flop property.)

[Table 2]

| | Exam ple 1 | Exam ple 2 | Exam ple 3 | Exam ple 4 | Exam ple 5 | Exam ple 6 | Exam ple 7 | Exam ple 8 | Exam ple 9 | Exam ple 10 | Exam ple 11 |
|---|---|---|---|---|---|---|---|---|---|---|---|
| Polyester resin dispersion (1) | 80 | | | | | 60 | | | | | 80 |
| Polyester resin dispersion (2) | | 80 | | | | | 60 | | | | |
| Polyester resin dispersion (3) | | | 80 | | | | | 60 | | | |
| Polyester resin dispersion (4) | | | | 80 | | | | | 60 | | |
| Polyester resin dispersion (5) | | | | | 80 | | | | | 60 | |
| Polyester resin dispersion (6) | | | | | | | | | | | |
| Polyester resin dispersion (7) | | | | | | | | | | | |
| Polyester resin dispersion (8) | | | | | | | | | | | |
| Melamine resin (1) | 20 | 20 | 20 | 20 | 20 | 20 | 20 | 20 | 20 | 20 | |
| Melamine resin (2) | | | | | | | | | | | 20 |
| Melamine resin (3) | | | | | | | | | | | |
| Polyacrylic resin dispersion | | | | | | 10 | 10 | 10 | 10 | 10 | |
| Polyurethane resin dispersion | | | | | | 10 | 10 | 10 | 10 | 10 | |
| $\eta 2/\eta 1$ | ⊙ | ○ | ⊙ | ○ | ○ | ⊙ | ○ | ⊙ | ○ | ○ | ⊙ |
| Layer miscibility | ⊙ | ⊙ | ⊙ | ○ | ○ | ⊙ | ⊙ | ⊙ | ○ | ○ | ○ |
| Appearance (dry-wet difference) | ⊙ | ○ | ⊙ | ○ | ○ | ⊙ | ○ | ⊙ | ○ | ○ | ⊙ |

[Table 3]

| | Comparative Example 1 | Comparative Example 2 | Comparative Example 3 | Comparative Example 4 | Comparative Example 5 | Comparative Example 6 | Comparative Example 7 |
|---|---|---|---|---|---|---|---|
| Polyester resin dispersion (1) | 80 | | | | | | |
| Polyester resin dispersion (2) | | | | | | | |
| Polyester resin dispersion (3) | | | | | | | |
| Polyester resin dispersion (4) | | | | | | | |
| Polyester resin dispersion (5) | | | | | | | |
| Polyester resin dispersion (6) | | 80 | | | 60 | | |
| Polyester resin dispersion (7) | | | 80 | | | 60 | |
| Polyester resin dispersion (8) | | | | 80 | | | 60 |
| Melamine resin (1) | | 20 | 20 | 20 | 20 | 20 | 20 |
| Melamine resin (2) | | | | | | | |
| Melamine resin (3) | 20 | | | | | | |
| Polyacrylic resin dispersion | | | | | 10 | 10 | 10 |
| Polyurethane resin dispersion | | | | | 10 | 10 | 10 |
| η2/η1 | ⊙ | × | × | × | × | × | × |
| Layer miscibility | × | ○ | ○ | ○ | ○ | ○ | ○ |
| Appearance (dry-wet difference) | ⊙ | × | × | × | × | × | × |

In Tables 2 and 3, the melamine resin (2) is CYMEL 211 (hydrophobic melamine resin) manufactured by Allnex, and the melamine resin (3) is CYMEL 327 (water-soluble melamine resin) manufactured by Allnex.

All of the aqueous coating compositions of the Examples were confirmed to exhibit a small viscosity change caused by change in solid content. Furthermore, all of the aqueous coating compositions of the Examples were reduced in generation of mix of layers between coating film layers, and were confirmed to be good in coating film appearance.

Comparative Example 1 is an example in which any hydrophobic melamine resin is not contained and only a water-soluble melamine resin is contained. In this example, generation of mix of layers between coating film layers was observed. Comparative Examples 2 to 7 show cases where η2/η1 deviates from the range of the present invention.

INDUSTRIAL APPLICABILITY

The aqueous coating composition of any embodiment of the present invention has an advantage that it exhibits a small viscosity change and coating can be performed without causing a large change in coating workability even when the amount of the solvent contained in the coating composition is reduced. The aqueous coating composition of any embodiment of the present invention also has an advantage that deterioration in coating film appearance such as mix of layers can be reduced.

## Claims

**1.** An aqueous coating composition comprising:

a polyester resin dispersion (A); and
a melamine resin (B),
wherein

a polyester resin constituting the polyester resin dispersion (A) comprises an alkyd resin having an acrylic vinyl-based polymer segment,
the melamine resin (B) comprises a hydrophobic melamine resin,
as to a viscosity of a dry coating film of the coating composition, a coating film viscosity $\eta 1$ of a dry coating film whose solid content is 60% by mass and a coating film viscosity $\eta 2$ of a dry coating film whose solid content is 80% by mass satisfy a following condition:

$$1 \leq \eta 2/\eta 1 \leq 10$$

where the coating film viscosities $\eta 1$ and $\eta 2$ are viscosities measured at a temperature of 25°C and a shear rate of 0.1 $sec^{-1}$.

**2.** The aqueous coating composition according to claim 1, wherein the aqueous coating composition comprises one or more dispersions selected from the group consisting of a polyacrylic resin dispersion and a polyurethane resin dispersion.

**3.** The aqueous coating composition according to claim 1 or 2, wherein the alkyd resin comprises the acrylic vinyl-based polymer segment in an amount of 20% by mass or more and 50% by mass or less.

**4.** The aqueous coating composition according to any one of claims 1 to 3, wherein the alkyd resin has a structure derived from an alicyclic polybasic acid in an amount of 20% by mass or more and 45% by mass or less.

**5.** A method for forming a multilayer coating film, the method comprising:

step (1) of applying a first aqueous base coating composition according to any one of claims 1 to 4 to a surface of an article to be coated to obtain an uncured first aqueous base coating film;
step (2) of applying a second aqueous base coating composition to the uncured first aqueous base coating film to form an uncured second aqueous base coating film;
step (3) of applying a clear coating composition to the uncured second aqueous base coating film to form an uncured clear coating film; and
step (4) of heating and curing the uncured first aqueous base coating film, the uncured second aqueous base coating film, and the uncured clear coating film obtained in the steps (1) to (3) at one time to form a multilayer coating film.

**INTERNATIONAL SEARCH REPORT**

International application No. PCT/JP2021/011130

A. CLASSIFICATION OF SUBJECT MATTER

C09D 167/00(2006.01)i; B05D 1/36(2006.01)i; B05D 7/24(2006.01)i; C09D5/02(2006.01)i; C09D 133/00(2006.01)i; C09D 161/28(2006.01)i; C09D 175/04(2006.01)i

FI: C09D167/00; C09D5/02; C09D161/28; C09D133/00; C09D175/04; B05D1/36 B; B05D7/24 301F

According to International Patent Classification (IPC) or to both national classification and IPC

B. FIELDS SEARCHED

Minimum documentation searched (classification system followed by classification symbols)

C09D167/00; B05D1/36; B05D7/24; C09D5/02; C09D133/00; C09D161/28; C09D175/04

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2013/151143 A1 (KANSAI PAINT CO., LTD.) 10 October 2013 (2013-10-10) claims, examples | 1-5 |
| A | JP 2008-144063 A (NIPPON PAINT CO., LTD.) 26 June 2008 (2008-06-26) claims, examples | 1-5 |
| A | JP 2010-504401 A (BASF CORPORATION) 12 February 2010 (2010-02-12) claims, examples | 1-5 |
| A | JP 01-129072 A (MITSUI TOATSU CHEMICALS, INC.) 22 May 1989 (1989-05-22) claims, examples | 1-5 |
| A | JP 2010-511775 A (E.I. DU PONT DE NEMOURS AND COMPANY) 15 April 2010 (2010-04-15) claims, examples | 1-5 |

☒ Further documents are listed in the continuation of Box C. ☒ See patent family annex.

* Special categories of cited documents:

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 11 June 2021 (11.06.2021) | 22 June 2021 (22.06.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2021/011130

C (Continuation). DOCUMENTS CONSIDERED TO BE RELEVANT

| Category* | Citation of document, with indication, where appropriate, of the relevant passages | Relevant to claim No. |
|---|---|---|
| A | JP 2002-542350 A (PPG INDUSTRIES LACKE GMBH) 10 December 2002 (2002-12-10) claims, examples | 1-5 |
| A | JP 2002-308993 A (KANSAI PAINT CO., LTD.) 23 October 2002 (2002-10-23) claims, examples | 1-5 |

Form PCT/ISA/210 (continuation of second sheet) (January 2015)

**INTERNATIONAL SEARCH REPORT**
Information on patent family members

International application No.
PCT/JP2021/011130

| Patent Documents referred in the Report | Publication Date | Patent Family | Publication Date |
|---|---|---|---|
| WO 2013/151143 A1 | 10 Oct. 2013 | CA 2869137 A1<br>claims, examples<br>CN 104204116 A<br>US 2015/0056376 A1 | |
| JP 2008-144063 A | 26 Jun. 2008 | CA 2612808 A1<br>claims, examples<br>CN 101200574 A<br>GB 2448956 A<br>US 2008/0139736 A1 | |
| JP 2010-504401 A | 12 Feb. 2010 | BR P10713089 A2<br>CA 2628054 A1<br>claims, examples<br>CN 101517022 A<br>EP 2064297 A1<br>US 2008/0076868 A1<br>WO 2008/036473 A1 | |
| JP 01-129072 A | 22 May 1989 | (Family: none) | |
| JP 2010-511775 A | 15 Apr. 2010 | AT 471969 T<br>CA 2668867 A1<br>claims, examples<br>EP 2094794 A2<br>ES 2347197 T3<br>MX 2009005840 A<br>US 2008/0132646 A1<br>US 2009/0162559 A1<br>US 2012/0135150 A1<br>WO 2008/070076 A2 | |
| JP 2002-542350 A | 10 Dec. 2002 | AT 229043 T<br>US 6770702 B1<br>claims, examples<br>AU 5388500 A<br>BR 10692 A<br>CA 2370343 A1<br>CN 1355817 A<br>CZ 20013782 A3<br>DE 19918133 A1<br>DE 19918136 A1<br>DE 19918137 A1<br>EA 200101057 A1<br>EP 1185568 A2<br>ES 2188552 T3<br>KR 10-2002-0012181 A<br>MX PA01010621 A<br>PL 351110 A1<br>PT 1185568 E<br>WO 2000/063265 A2 | |
| JP 2002-308993 A | 23 Oct. 2002 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008302274 A
- JP 2006070095 A
- JP 2002012816 A
- JP 4224192 B
- JP 55041607 B
- JP 439076 B
- JP 48041718 B